# EUROPEAN PATENT APPLICATION

(11) **EP 2 915 641 A1**
(43) Date of publication of application: **09.09.2015**
(21) Application number: 12881528.9
(22) Date of filing: 26.10.2012
(51) Int. Cl.: B28C 5/42, B60P 3/16

(54) **CHUTE SWIVEL-REGULATION MECHANISM**

(71) Applicant: KAYABA INDUSTRY CO., LTD., Minato-ku Tokyo 105-6111 (JP)
(72) Inventor: KASAHARA, Tetsuo, Minato-ku, Tokyo 105-6111 (JP)
(74) Representative: Grünecker Patent- und Rechtsanwälte PartG mbB
(86) International application number: PCT/JP2012/077701
(87) International publication number: WO 2014/064828

(57) **Abstract**

A chute swing restricting mechanism for locking a chute supported by a rotary shaft being rotatably arranged on a vehicle body of a concrete mixer truck in a storage position includes an engagement part which is rotatable along with the rotary shaft and has an engagement hole, a swing restricting pin which is movably installed relative to the vehicle body, and an energizing member for energizing the swing restricting pin. The swing restricting pin is configured to be inserted into the engagement hole of the engagement part according to an energizing force of the energizing member when the chute is swung and reaches the storage position.

## Description

### TECHNICAL FIELD

The present invention relates to a chute swing restricting mechanism for locking a chute, which is swingably installed on a vehicle body of a concrete mixer truck, in a storage position.

### BACKGROUND ART

Concrete mixer truck is a vehicle for loading ready mixed concrete in a mixer drum which is rotatably mounted on a vehicle body and transporting the ready mixed concrete.

Japanese Unexamined Patent Application Publication No.2001-105422 discloses a concrete mixer truck provided with a chute which is arranged at the rear of a vehicle body in order to guide ready mixed concrete ejected from a mixer drum.

### SUMMARY OF INVENTION

Such a concrete mixer truck is configured to allow swing of a chute in the horizontal direction and inclination angle adjustment thereof in order to guide ready mixed concrete to a desired position.

By the way, in such an occasion after finishing the work to discharge ready mixed concrete, a chute is stored in a storage position so as not to be an obstacle. In a chute which is thus stored in a storage position, swing from the storage position is restricted by a chute swing restricting mechanism.

The conventional chute swing restricting mechanism for a concrete mixer truck is provided with a boss part formed on a chute side and a pair of stopper walls formed on a vehicle body side and installed to be opposed to each other with an interval which is slightly larger than the width of the boss part. According to such a chute swing restricting mechanism, the chute is brought down while adjusting a swing position of the chute and the boss part of the chute is inserted into a space between the stopper walls so that the chute can be prevented from swinging from a storage position.

However, it requires an operator or somebody else to cause the chute to be brought down and positioned to swing when the boss part is inserted in a space between the stopper walls, and the work to lock the chute in a storage position is complicated, which results in poor work efficiency.

Therefore, the present invention was achieved in view of the above problems and aims at providing a chute swing restricting mechanism by which a chute of a concrete mixer truck can be easily locked in a storage position.

According to an aspect of this invention, a chute swing restricting mechanism for locking a chute supported by a rotary shaft being rotatably arranged on a vehicle body of a concrete mixer truck in a storage position is provided. The chute swing restricting mechanism includes an engagement part which is rotatable along with the rotary shaft and has an engagement hole, a swing restricting pin which is movably installed relative to the vehicle body, and an energizing member for energizing the swing restricting pin. The swing restricting pin is configured to be inserted into the engagement hole of the engagement part according to an energizing force of the energizing member when the chute is swung and reaches the storage position.

The details as well as other features and advantages of this invention are set forth in the remainder of the specification and are shown in the accompanying drawings.

### BRIEF DESCRIPTION OF DRAWINGS

Fig. 1 is a rear view of a concrete mixer truck provided with a chute swing restricting mechanism according to an embodiment of the present invention.
Fig.2 is a side view of a chute and the chute swing restricting mechanism.
Fig.3 is a plan view of the chute swing restricting mechanism.
Fig.4 is a partial longitudinal sectional view of the chute swing restricting mechanism observed when swing of the chute is not restricted.
Fig.5 is a partial longitudinal sectional view of the chute swing restricting mechanism observed when the chute is swinging.
Fig.6 is a partial longitudinal sectional view of the chute swing restricting mechanism observed when the chute is locked in a storage position.

### DESCRIPTION OF EMBODIMENTS

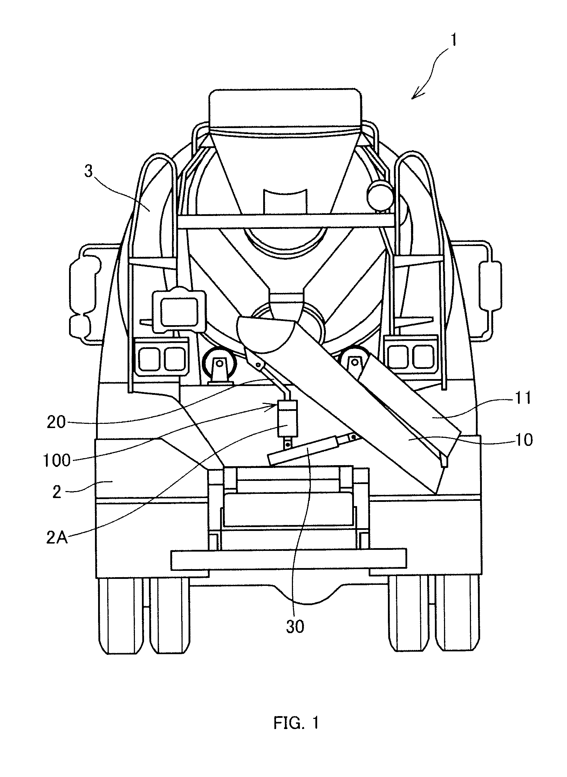

With reference to Fig.1 to Fig.6, a chute swing restricting mechanism 100 of a concrete mixer truck 1 according to an embodiment of the present invention will be explained.

As shown in Fig.1, the concrete mixer truck 1 is provided with a mixer drum 3 rotatably installed on a vehicle body 2, and a chute 10 swingably installed at the rear of the vehicle body 2 in order to guide ready mixed concrete ejected from the mixer drum 3.

An extension chute 11 is rotatably installed at a discharge end (or lower end) of the chute 10. The chute 10 and the extension chute 11 are formed as a gutter-shaped passage member.

As shown in Fig.1, when the extension chute 11 is turned and positioned in a storage position located above the chute 10, ready mixed concrete ejected from the mixer drum 3 is discharged from the discharge end of the chute 10. In contrast, when the extension chute 11 is turned and located in a maximum turning position in which one passage is configured with the chute 10, ready mixed concrete ejected from the mixer drum 3 is discharged from a discharge end of the extension chute 11. By thus using the extension chute 11, the length of a passage for guiding ready mixed concrete ejected from the mixer drum 3 can be extended.

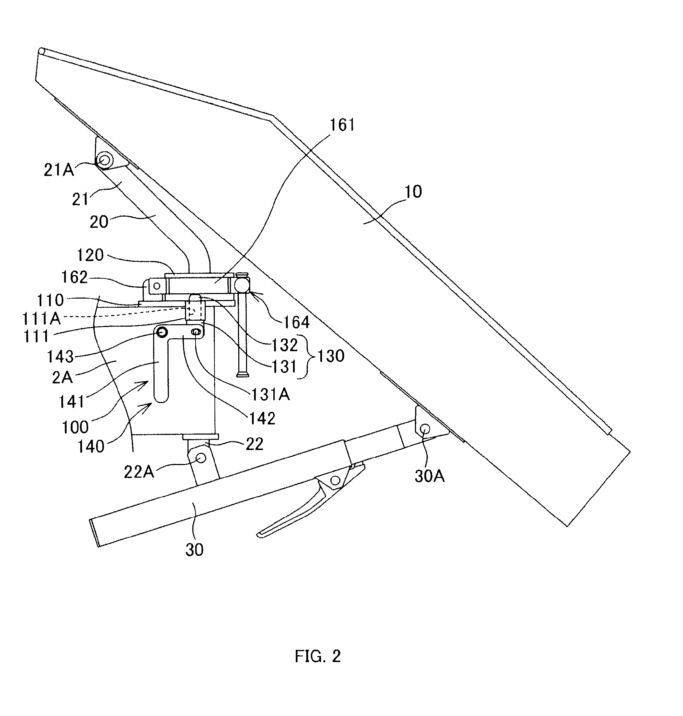

As shown in Fig.1 and Fig.2, a protrusion part 2A which protrudes rearward is formed at the rear of the vehicle body 2 and a rotary shaft 20 for supporting the chute 10 is attached to the protrusion part 2A. The protrusion part 2A has a bearing hole extended vertically and the bearing hole is used to insert the rotary shaft 20 rotatably. The rotary shaft 20 rotates relative to the protrusion part 2A, whereby the chute 10 swings in the horizontal direction.

An upper end 21 of the rotary shaft 20 positioned above the protrusion part 2A is turnably attached to an upper area of an undersurface of the chute 10 via a turning pin 21A. There is also a telescopic arm 30 which is turnably attached, via a turning pin 22A, to a lower end 22 of the rotary shaft 20 positioned below the protrusion part 2A.

The tip end of the telescopic arm 30 is turnably attached to a lower end of the undersurface of the chute 10 via a turning pin 30A. The telescopic arm 30 is configured to extend and contract in the arm shaft direction. By extending and contracting the telescopic arm 30, an inclination angle of the chute 10 can be changed.

The chute 10 is thus configured with an adjustable swing position and inclination angle, which makes it possible to guide ready mixed concrete ejected from the mixer drum 3 to a desired position. Note that description of the extension chute 11 is omitted in Fig.2.

The aforementioned chute 10 is stored in a storage position so as not to be an obstacle in such an occasion after finishing the work to discharge ready mixed concrete. As shown in Fig.1, in the storage position, the discharge end of the chute 10 is, for example, turned to the right at about 90 degrees to the traveling direction of the vehicle and located in the lowermost position. The chute swing restricting mechanism 100 restricts swing of the chute 10, which is stored in the storage position, from the storage position.

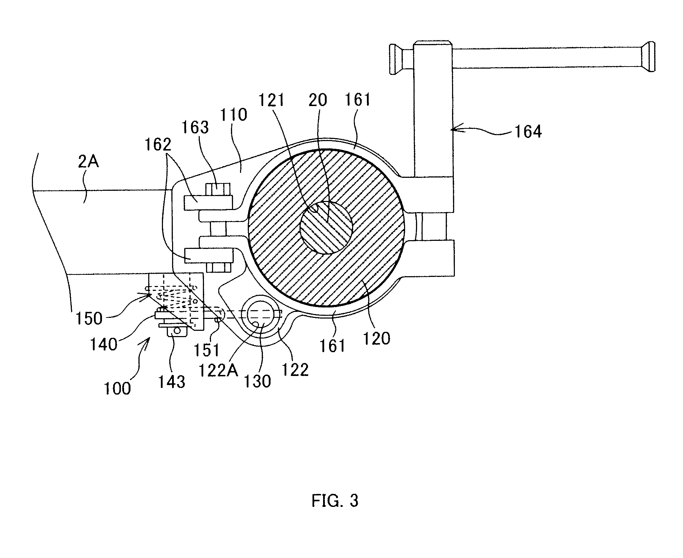

As shown in Fig.2 and Fig.3, the chute swing restricting mechanism 100 is provided with a fixed part 110 fixed on the upper surface of the protrusion part 2A of the vehicle body 2, a rotary part 120 fitted around the outer periphery of the rotary shaft 20, a swing restricting pin 130 which can be engaged with an engagement part 122 formed in the outer periphery of the rotary part 120, a lever 140 connected to the swing restricting pin 130, and a torsion coil spring 150 (i.e. energizing member) for energizing the swing restricting pin 130 upward.

The fixed part 110 is a plate member and arranged on the protrusion part 2A. The rotary part 120 is loaded on the fixed part 110 in a state of being fitted around the outer periphery of the rotary shaft 20.

The rotary part 120 is a cylindrical member formed with a through hole 121 (see Fig.3) which extends along the shaft direction at the center of the rotary part 120. The rotary part 120 is fitted around the outer periphery of the rotary shaft 20 via the through hole 121. The rotary part 120 is thus fixed to the outer periphery of the rotary shaft 20 and rotates along with rotation of the rotary shaft 20.

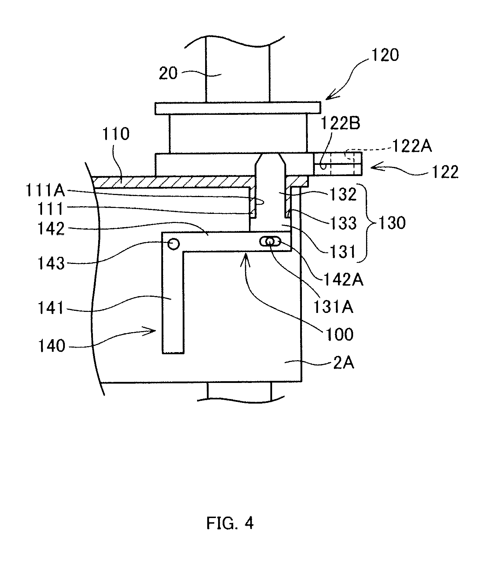

As shown in Fig.3 and Fig.4, the engagement part 122 which can be engaged with the swing restricting pin 130 is arranged in a lower area of the outer periphery of the rotary part 120. The engagement part 122 is formed to protrude from the lower area of the outer periphery of the rotary part 120 to the outside of the radial direction. The engagement part 122 has an engagement hole 122A into which the swing restricting pin 130 is inserted, and a tapered surface 122B for guiding the tip end of the swing restricting pin 130 to a lower inlet of the engagement hole 122A (see Fig.4).

As shown in Fig.2 and Fig.3, the swing restricting pin 130 is a rod-shaped member and arranged on the side of the protrusion part 2A of the vehicle body 2. In the swing restricting pin 130, a base end part 131 is diametrically expanded more than a tip end part 132 and the tip end part 132 is slidably inserted into a through hole 111A of a guide part 111 formed in the fixed part 110. The through hole 111A is a hole extended vertically. The tip end part 132 slides into the through hole 111A of the guide part 111 to enable vertical motion of the swing restricting pin 130 on the side of the protrusion part 2A.

Note that the tip end part 132 of the swing restricting pin 130 protrudes upward from the upper end surface of the guide part 111 through the through hole 111A when a stepped surface 133 which is positioned in the boundary between the tip end part 132 and the base end part 131 of the swing restricting pin 130 (see Fig.4) is abutted on the lower end surface of the guide part 111.

As shown in Fig.2 and Fig.4, the lever 140 for use in releasing the engagement between the swing restricting pin 130 and the engagement part 122 is attached to the side of the protrusion part 2A of the vehicle body 2. The lever 140 is an L-shaped member and turnably arranged on the side of the protrusion part 2A via a turning shaft 143.

One end of the lever 140 is formed as an operation part 141 for accepting an operation to turn the lever by an operator or someone else and the other end of the lever 140 is formed as a connector 142 to be connected to the base end part 131 of the swing restricting pin 130. In the connector 142 of the lever 140, a long hole 142A (see Fig.4) is formed along the extension direction of the connector 142. The long hole 142A is used to insert an engagement pin 131A arranged in the base end part 131 of the swing restricting pin 130 so that the lever 140 and the swing restricting pin 130 are connected to each other.

As shown in Fig.3, the torsion coil spring 150 is attached to the turning shaft 143 and the turning shaft 143 is inserted into the center of the torsion coil spring 150. One end 151 of the torsion coil spring 150 is configured to be abutted on the undersurface of the connector 142 of the lever 140 from below in order to energize the swing restricting pin 130 upward via the connector 142.

In the aforementioned chute swing restricting mechanism 100, the tip end part 132 of the swing restricting pin 130 is inserted into the engagement hole 122A of the engagement part 122 of the rotary part 120 when the chute 10 is located in the storage position in such an occasion after finishing the work to discharge ready mixed concrete, whereby swing of the chute 10 from the storage position is restricted.

Note that, as shown in Fig.2 and Fig.3, a pair of contact plates 161 for use in positioning the chute 10 to a desired swing position in such an occasion as discharging ready mixed concrete is installed in the periphery of the rotary part 120 arranged in the rotary shaft 20. Each of the contact plates 161 is a U-shaped member arranged along the outer periphery of the rotary part 120 in the center position of the shaft direction. Two of the contact plates 161 are arranged horizontally to be opposed to each other. One end of these contact plates 161 is fixed in a space between a pair of wall parts 162, which is formed to protrude in the fixed part 110, via a bolt 163. In the other end of these contact plates 161, a screw mechanism 164 which is capable of adjusting an interval between the contact plates 161 on the other end is arranged. The screw mechanism 164 is used to narrow the interval between two of the contact plates 161 in the other end in order to hold and squeeze the outer periphery surface of the rotary part 120 by two of the contact plates 161, whereby making it possible to position the chute 10 in a desired swing position.

Next, movement of the chute swing restricting mechanism 100 for locking the chute 10 in the storage position will be explained with reference to Fig.4 to Fig.6.

As shown in Fig.4, when the chute 10 is not stored, the swing restricting pin 130 of the chute swing restricting mechanism 100 is not engaged with the engagement part 122 of the rotary part 120 and the rotary shaft 20 for supporting the chute 10 is allowed to rotate relative to the protrusion part 2A of the vehicle body 2.

At this time, owing to the energizing force of the torsion coil spring 150, the stepped surface 133 of the swing restricting pin 130 is abutted on the lower end surface of the guide part 111 and the tip end part 132 of the swing restricting pin 130 protrudes upward from the upper end surface of the guide part 111 through the through hole 111A. The stepped surface 133 of the swing restricting pin 130 thus functions as a stopper to define an upper limit position of the swing restricting pin 130.

Note that when the chute 10 is not locked by the chute swing restricting mechanism 100, a swing position of the chute 10 is determined via the aforementioned contact plates 161 (see Fig.3).

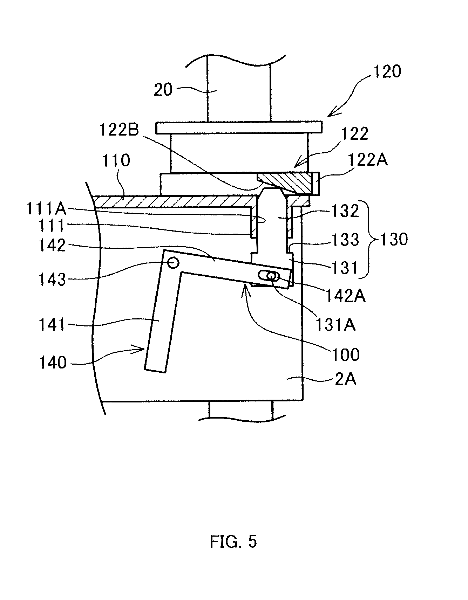

When the chute 10 is swung toward the storage position in such an occasion after finishing the work to discharge ready mixed concrete, the engagement part 122 of the rotary part 120 moves toward the tip end part 132 of the swing restricting pin 130. As shown in Fig.5, when the chute 10 is swung toward the storage position, the tip end part 132 of the swing restricting pin 130 is abutted on the tapered surface 122B of the engagement part 122 and the swing restricting pin 130 is pressed downward to resist the energizing force of the torsion coil spring 150 via the tapered surface 122B. The tip end part 132 of the swing restricting pin 130 is guided to the lower inlet of the engagement hole 122A of the engagement part 122 while sliding on the tapered surface 122B.

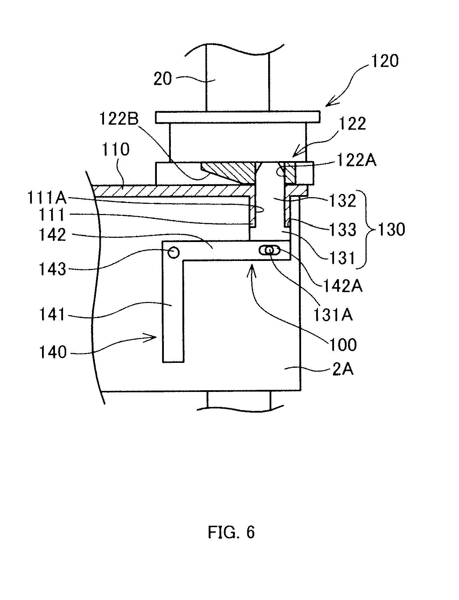

As shown in Fig.6, when the chute 10 swings and reaches the storage position, the tip end part 132 of the swing restricting pin 130 guided by the tapered surface 122B is positioned in the lower inlet of the engagement hole 122A of the engagement part 122, in which the swing restricting pin 130 is pressed upward by the energizing force of the torsion coil spring 150 and the tip end part 132 is inserted into the engagement hole 122A. By thus inserting the tip end part 132 into the engagement hole 122A, the swing restricting pin 130 and the engagement part 122 are engaged with each other to restrict swing of the chute 10 from the storage position.

Note that, in Fig.6, operating the operation part 141 so that the lever 140 turns clockwise allows pulling out of the tip end part 132 of the swing restricting pin 130 from the engagement hole 122A of the engagement part 122, whereby engagement between the swing restricting pin 130 and the engagement part 122 can be released. By thus releasing engagement between the swing restricting pin 130 and the engagement part 122, the chute 10 is allowed to swing from the storage position to a desired position.

According to the chute swing restricting mechanism 100 of the present embodiment, the following effects can be obtained.

In the chute swing restricting mechanism 100, when the chute 10 supported by the rotary shaft 20 swings and reaches the storage position, the swing restricting pin 130 is inserted into the engagement hole 122A of the engagement part 122 of the rotary shaft 20 according to the energizing force of the torsion coil spring 150. Accordingly, it is possible for an operator or someone else to realize engagement between the rotation restricting pin 130 and the engagement part 122 of the rotary shaft 20 by simply causing the chute 10 to swing to the storage position, whereby the chute 10 can be easily locked in the storage position without carrying out a complicated locking operation as required in the conventional technique. It is also unnecessary to return the chute 10 to the lowermost position in such an occasion after finishing the work to discharge ready mixed concrete and the chute 10 can be locked by simply causing the chute 10 to swing to the storage position from a position of any heights. Therefore, time and labor spent for lifting the chute 10 in next use can be saved, which results in improved work efficiency.

Since the engagement part 122 of the rotary part 120 is provided with the tapered surface 122B for guiding the tip end part 132 of the swing restricting pin 130 to the lower inlet of the engagement hole 122A, the tip end part 132 of the swing restricting pin 130 can be smoothly guided to the engagement hole 122A. Accordingly, when the chute 10 swings and reaches the storage position, the swing restricting pin 130 is securely inserted into the engagement hole 122A of the engagement part 122.

The lever 140 is connected to the base end part 131 of the swing restricting pin 130 and the lever 140 is turned by operating the operation part 141 of the lever 140 so that the tip end part 132 of the swing restricting pin 130 can be pulled out from the engagement hole 122A of the engagement part 122. The lever 140 is thus used to enable easy release of engagement between the swing restricting pin 130 and the engagement part 122.

Although the invention has been described above with reference to certain embodiments, the invention is not limited to the embodiments described above. Modifications and variations of the embodiments described above will occur to those skilled in the art, within the scope of the claims.

Although the torsion coil spring 150 is used to energize the swing restricting pin 130 in the chute swing restricting mechanism 100 according to the present embodiment, any energizing members other than the torsion coil spring 150 may also be used as long as the swing restricting pin 130 is energized upward (or to a predetermined direction). For example, the swing restricting pin 130 may be energized upward by a compression coil spring, a leaf spring or other springs arranged on the lower side of the base end part 131 of the swing restricting pin 130.

## Claims

1. A chute swing restricting mechanism for locking a chute supported by a rotary shaft being rotatably arranged on a vehicle body of a concrete mixer truck in a storage position, the chute swing restricting mechanism comprising:
an engagement part which is rotatable along with the rotary shaft and has an engagement hole;
a swing restricting pin which is movably installed relative to the vehicle body; and
an energizing member for energizing the swing restricting pin,
wherein the swing restricting pin is configured to be inserted into the engagement hole of the engagement part according to an energizing force of the energizing member when the chute is swung and reaches the storage position.

2. The chute swing restricting mechanism according to claim 1,
wherein the engagement part is configured to have a tapered surface and to guide a tip end part of the swing restricting pin to the engagement hole by using the tapered surface when the chute is swung to the storage position.

3. The chute swing restricting mechanism according to claim 1, the chute swing restricting mechanism further comprising a guide part which is fixed to the vehicle body and has a through hole in which a tip end part of the swing restricting pin is slidably inserted;
wherein the swing restricting pin is configured to have a base end part diametrically expanded more than the tip end part thereof and to allow protrusion of the tip end part from the other end of the guide part through the through hole in a state of causing a stepped surface, being positioned in the boundary between the tip end part and the base end part, to be abutted on one end of the guide part by the energizing member; and
the tip end part of the swing restricting pin in a state of protruding from the guide part is inserted into the engagement hole.

4. The chute swing restricting mechanism according to claim 3, the chute swing restricting mechanism further comprising a lever which is rotatably installed on the vehicle body via a turning shaft;
wherein the swing restricting pin has an engagement pin in the base end part thereof;
one end of the lever is formed as an operation part to accept an operation to turn the lever; and
the other end of the lever has a long hole for inserting the engagement pin and is formed as a connection portion to be connected to the base end part of the swing restricting pin.

5. The chute swing restricting mechanism according to claim 4,
wherein the energizing member is a torsion coil spring arranged in the turning shaft in order to energize the swing restricting pin via the lever.
